(19) Europäisches Patentamt

European Patent Office

Office européen des brevets

(11) EP 1 399 790 B1

(12) FASCICULE DE BREVET EUROPEEN

(45) Date de publication et mention
de la délivrance du brevet:
15.03.2006 Bulletin 2006/11

(51) Int Cl.:
G05D 13/62 (2006.01)          H02P 5/00 (2006.01)
G05B 19/19 (2006.01)

(21) Numéro de dépôt: 02730394.0

(22) Date de dépôt: 06.05.2002

(86) Numéro de dépôt international:
PCT/FR2002/001548

(87) Numéro de publication internationale:
WO 2002/097546 (05.12.2002 Gazette 2002/49)

(54) **PROCEDE ET DISPOSITIF DE CONTROLE DE VITESSE ANGULAIRE D'UNE CHAINE ELECTROMECANIQUE PEU AMORTIE**

VERFAHREN UND VORRICHTUNG ZUR WINKELGESCHWINDIGKEITSSTEUERUNG EINER SCHWACHGEDÄMPFTEN ELEKTROMECHANISCHEN KETTE

METHOD AND DEVICE FOR CONTROLLING ANGULAR SPEED OF AN ELECTROMECHANICAL CHAIN WITH LOW DAMPING

(84) Etats contractants désignés:
AT BE CH CY DE DK ES FI FR GB GR IE IT LI LU MC NL PT SE TR

(30) Priorité: 29.05.2001 FR 0106987

(43) Date de publication de la demande:
24.03.2004 Bulletin 2004/13

(73) Titulaire: **Alstom**
92300 Levallois-Perret (FR)

(72) Inventeurs:
• **THOMAS, Jean-Luc**
F-77300 Fontainebleau (FR)
• **OUSTALOUP, Alain**
F-33400 Talence (FR)
• **SABATIER, Jocelyn**
F-33400 Talence (FR)
• **POULLAIN, Serge**
F-91290 Arpajon (FR)
• **LATTEUX, Patrick**
F-91300 Massy (FR)

(74) Mandataire: **Domenego, Bertrand et al**
**Cabinet Lavoix**
**2, place d'Estienne d'Orves**
**75441 Paris Cedex 09 (FR)**

(56) Documents cités:

• FERRETTI G ET AL: "Motor and load velocity estimation for digital servo drives: an application to robots with elastic joints" INDUSTRIAL ELECTRONICS, CONTROL AND INSTRUMENTATION, 1994. IECON '94., 20TH INTERNATIONAL CONFERENCE ON BOLOGNA, ITALY 5-9 SEPT. 1994, NEW YORK, NY, USA, IEEE, 5 septembre 1994 (1994-09-05), pages 1748-1753, XP010137646 ISBN: 0-7803-1328-3
• OUSTALOUP A ET AL: "First generation scalar CRONE control: application to a two DOF manipulator and comparison with non linear decoupling control" PROCEEDINGS OF THE INTERNATIONAL CONFERENCE ON SYSTEMS, MAN AND CYBERNETICS. LE TOUQUET, OCT. 17 - 20, 1993, NEW YORK, IEEE, US, vol. 3, 17 octobre 1993 (1993-10-17), pages 453-458, XP010132405 ISBN: 0-7803-0911-1
• OUSTALOUP A ET AL: "The great principles of the CRONE control" PROCEEDINGS OF THE INTERNATIONAL CONFERENCE ON SYSTEMS, MAN AND CYBERNETICS. LE TOUQUET, OCT. 17 - 20, 1993, NEW YORK, IEEE, US, vol. 3, 17 octobre 1993 (1993-10-17), pages 118-129, XP010132108 ISBN: 0-7803-0911-1
• LIN F-J: "Robust speed-controlled induction-motor drive using EKF and RLS estimators" IEE PROCEEDINGS: ELECTRIC POWER APPLICATIONS, INSTITUTION OF ELECTRICAL ENGINEERS, GB, vol. 143, no. 3, 10 mai 1996 (1996-05-10), pages 186-192, XP006006391 ISSN: 1350-2352

**Description**

L'invention concerne un procédé de contrôle de la vitesse mécanique angulaire d'une charge entraînée en rotation par une chaîne électromécanique peu amortie et présentant éventuellement des non-linéarités telles que des jeux de transmission, en l'absence d'une mesure de vitesse angulaire de la charge.

L'invention concerne également un dispositif mettant en oeuvre ce procédé de contrôle de vitesse.

Dans l'ensemble du texte, le terme "charge" désigne indifféremment tout mécanisme susceptible d'être entraîné en rotation par l'intermédiaire d'une chaîne électromécanique peu amortie. Ainsi, et de manière nullement limitative, la charge peut être constituée par un rouleau de laminoir ou de machine de fabrication de papier, une hélice de navire, un essieu de motrice ferroviaire, etc..

Par ailleurs, l'expression "chaîne électromécanique" désigne un ensemble comprenant un actionneur de couple, formé d'un convertisseur de puissance et d'un moteur électrique d'un type quelconque, ainsi qu'une chaîne cinématique au travers de laquelle cet actionneur entraîne la charge.

Enfin, l'expression "peu amortie" signifie que la chaîne électromécanique présente des fréquences de résonance mécaniques. Ces fréquences sont définies par les paramètres de la chaîne, telles que les inerties et les raideurs. Dans le contexte de l'invention, ces paramètres sont mal connus ou varient en cours de fonctionnement, ce qui entraîne une incertitude ou une variation des fréquences de résonance de la chaîne électromécanique et des amplitudes associées.

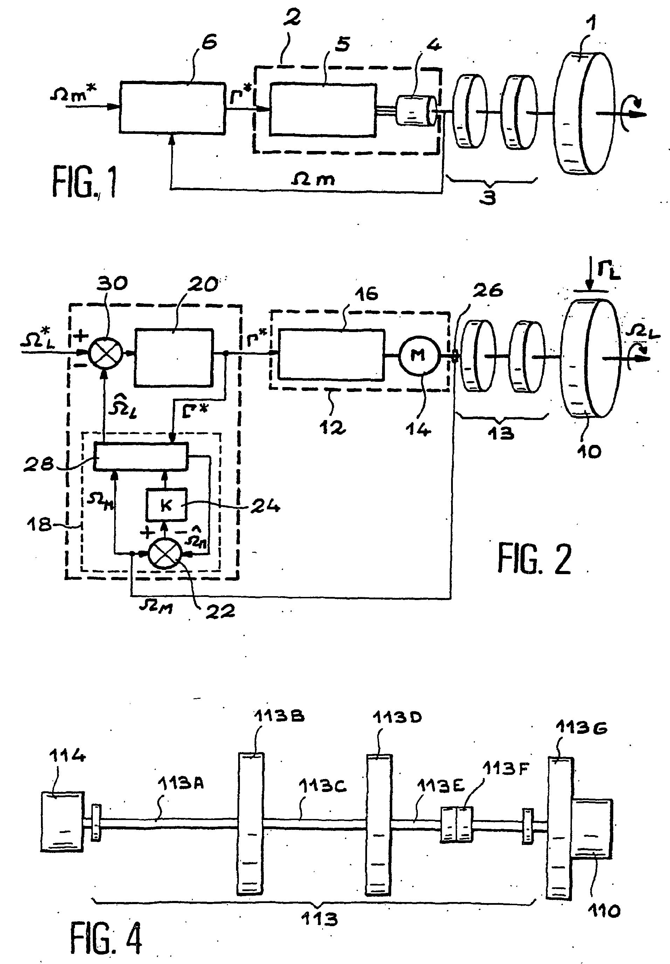

On a représenté schématiquement sur la figure 1 des dessins annexés un système d'asservissement en boucle fermée de type connu, assurant le contrôle de la vitesse de rotation d'une charge 1, entraînée par un actionneur de couple 2 au travers d'une chaîne cinématique 3. L'actionneur de couple 2 comprend un moteur électrique 4 couplé à un convertisseur de puissance 5.

Le contrôle de la vitesse du moteur 4 est assuré par un correcteur 6 qui reçoit un signal de référence $\Omega_m^*$ représentatif de la vitesse désirée du moteur 4. Lorsqu'on ne dispose pas d'une mesure de la vitesse de la charge 1, le correcteur 6 reçoit également un signal $\Omega_m$ représentatif de la vitesse réelle du moteur 4. En réponse, le correcteur 6 délivre un signal $\Gamma^*$ de référence de couple, qui commande l'actionneur de couple 2.

Parmi les correcteurs existants, on citera par exemple les correcteurs PI (Proportionnel Intégral), PID (Proportionnel Intégral Dérivé), $H_\infty$, QFT (de l'anglais "Quantitative Feedback Theory") et RST.

Dans le domaine fréquentiel et en utilisant les transformées de Laplace, on sait que la réponse d'un correcteur se caractérise par une fonction de transfert rationnelle $C(s)$, qui correspond au rapport de deux polynômes $N(s)/D(s)$, où $s$ désigne la variable opérationnelle complexe du système étudié. La fonction de transfert du système en boucle ouverte intégrant le correcteur est représentée dans le plan de Black, de Nyquist ou de Bode, par une courbe appelée "gabarit fréquentiel", qui montre les évolutions du gain et du déphasage entre l'entrée et la sortie du système, en fonction de la partie réelle ω de la variable opérationnelle $s$.

Les différents correcteurs se distinguent notamment les uns des autres par le degré de chacun des polynômes $N(s)$ et $D(s)$ c'est-à-dire par leur nombre de zéros (racines du numérateur) et de pôles (racines du dénominateur). Quand le système est d'ordre élevé, peu amorti, c'est-à-dire lorsqu'il comprend un nombre élevé de pôles et de zéros, seul un correcteur d'ordre élevé permet de satisfaire aux objectifs de robustesse en performances et stabilité. Toutefois, cela a aussi pour conséquence d'augmenter le nombre des coefficients des polynômes du correcteur et, par conséquent, de rendre plus difficile le réglage optimal dudit correcteur.

Dans le cas où un correcteur PI ou PID est utilisé, les degrés des polynômes associés sont respectivement de deux et trois coefficients. Le réglage est donc simple. En contrepartie, satisfaire aux objectifs de robustesse en performances et stabilité n'est plus possible en présence d'une chaîne électromécanique caractérisée par des modes résonants et, éventuellement, par des non-linéarités telles que des jeux de transmission.

Pour remédier aux difficultés qui apparaissent lorsqu'on utilise un correcteur PI ou PID en présence d'une chaîne électromécanique peu amortie, il a été proposé d'associer à un tel correcteur un retour d'état basé sur un signal délivré par un estimateur. Cette solution est décrite dans la thèse de Marius Goslar intitulée "Ein Beitrag zur anwendungsorientierten Zustandsregelung elektrischer Hochleistungsantriebe", présentée le 14 août 1998 et publiée en grande Bretagne par "Conservatree Print & Design" ISBN 0953473503.

De façon plus précise, la thèse précitée concerne le cas où l'on connaît la vitesse angulaire de la charge. Il y est proposé d'utiliser les algorithmes génétiques pour optimiser les coefficients des polynômes du correcteur.

Cette solution connue assure un bon amortissement du système en présence de fréquences de résonance. Toutefois, elle reste peu satisfaisante en termes de robustesse. En outre, l'utilisation des algorithmes génétiques pour le calcul des coefficients des polynômes du correcteur rend le réglage de celui-ci particulièrement complexe.

Lorsqu'on utilise un correcteur de type $H_\infty$, QFT ou RST, les degrés des polynômes sont sensiblement plus élevés. Ces correcteurs sont dits "robustes" car ils permettent au système corrigé de conserver sa stabilité et ses performances autour des conditions nominales, c'est-à-dire notamment en présence d'incertitudes sur les paramètres et, éventuellement, de non-linéarités dans la transmission, telles que des jeux de transmission. En revanche, ils présentent un nombre élevé de coefficients qui rend leur réglage particulièrement délicat.

Quel que soit le type de correcteur utilisé, le contrôle robuste de la vitesse angulaire de la charge est rendu difficile lorsqu'il n'est pas possible de disposer d'une mesure directe de cette vitesse.

Le document « Motor and load velocity estimation for digital servo drives : an application to robots with elastic joints » de FERRETTI et al, dans Industrial Electronics, Control and Instrumentations, 5 septembre 1994, IECON, New-York, USA, IEEE, pages 1748-1753, XP010137646 ISBN : 0-7803-1328-3, décrit un procédé d'estimation de la vitesse angulaire d'une charge entraînée en rotation par un moteur au travers d'une chaîne électromécanique peu amortie dans le cadre d'un contrôle de la position angulaire de cette charge.

Le document « First génération scalar CRONE control : application to a two DOF manipulator and comparison with non linear decoupling control » de OUSTALOUP and al., dans Proceedings of the International Conference on Systems, Man and Cybernetics, 17 octobre 1993, New-York, USA, IEEE, vol. 3, pages 453-458, XP010132108 ISBN: 0-7803-0911-1, divulgue un procédé de contrôle du type CRONE de la position angulaire d'une charge entraînée en rotation par un moteur au travers une chaîne électromécanique rigide.

L'invention a précisément pour objet un procédé et un dispositif permettant de contrôler la vitesse mécanique d'une charge entraînée en rotation au travers d'une chaîne électromécanique peu amortie, sans mesurer cette vitesse, en présentant à la fois des performances statiques et dynamiques nominales satisfaisantes et une bonne robustesse, pour un nombre minimal de coefficients de réglage.

Conformément à l'invention, ce résultat est obtenu au moyen d'un procédé de contrôle de vitesse d'une charge entraînée en rotation par un moteur électrique au travers d'une chaîne électromécanique peu amortie, selon lequel on mesure la vitesse réelle du moteur et on détermine une grandeur de référence $\Gamma^*$ d'actionnement en couple du moteur à partir de la vitesse mesurée $\Omega_m$ du moteur et d'une vitesse de référence $\Omega_L^*$ de la charge, caractérisé en ce qu'on détermine ladite grandeur de référence $\Gamma^*$:

- en calculant une vitesse estimée $\hat{\Omega}_L$ de la charge par un observateur dont les entrées sont la grandeur de référence $\Gamma^*$ et une erreur d'innovation représentée par la différence pondérée entre la vitesse mesurée $\Omega_m$ du moteur et une vitesse estimée $\hat{\Omega}_m$ du moteur ;
- en calculant la différence entre la vitesse de référence $\Omega_L^*$ de la charge et la vitesse estimée $\hat{\Omega}_L$ de la charge ; et
- en utilisant la différence ainsi calculée comme entrée d'un correcteur robuste d'ordre non entier, de type CRONE, dont la réalisation physique est assurée par un correcteur d'ordre entier, obtenu par approximation dans le domaine fréquentiel.

Dans le procédé ainsi défini, le calcul de la vitesse estimée de la charge autorise un contrôle effectif de cette vitesse en l'absence de sa mesure. Dans la pratique, ce calcul est effectué par un observateur, tel qu'un filtre de Kalman, apte à reconstituer l'état interne de la chaîne électromécanique à partir d'un modèle dynamique de celle-ci.

Avantageusement, l'observateur utilise un modèle dynamique tel que :

$$
\begin{bmatrix} \dot{X}_{CC} \\ \dot{X}_{AE} \\ \dot{\Gamma}_L \end{bmatrix} = \begin{bmatrix} [A_{CC}] & \begin{bmatrix} couplage \\ 1/2 \end{bmatrix} & \begin{bmatrix} couplage \\ 1et2/3 \end{bmatrix} \\ [0] & [A_{AE}] & \begin{bmatrix} couplage \\ 1et2/3 \end{bmatrix} \\ [0] & [0] & [0] \end{bmatrix} \begin{bmatrix} X_{CC} \\ X_{AE} \\ \Gamma_L \end{bmatrix} + \begin{bmatrix} B \\ 0 \end{bmatrix} \Gamma^* \, ,
$$

dans lequel $A_{CC}$, $A_{AE}$ et $B$ sont des matrices de coefficients affectés respectivement à la chaîne cinématique, à l'actionneur électrique et à la nature de la perturbation du couple résistant appliqué à la charge, $X_{CC}$, $X_{AE}$ et $\Gamma_L$ représentant respectivement des états de la chaîne cinématique, de l'actionneur électrique et du couple résistant appliqué à la charge. En outre, les expressions "*couplage*1/2" et "*couplage*1*et*2/3" désignent respectivement une matrice de coefficients de couplage entre l'actionneur électrique et la chaîne cinématique et une matrice de coefficients de couplage entre l'ensemble actionneur électrique-chaîne cinématique et la charge.

D'autre part, l'utilisation d'un correcteur d'ordre non entier pour élaborer le correcteur d'ordre entier servant à corriger la vitesse estimée de la charge permet de bénéficier des propriétés de robustesse de ce type de commande tout en limitant le nombre des coefficients de réglage à une valeur comparable à celle des commandes non robustes de type PI ou PID. On assure ainsi un comportement robuste du contrôle de vitesse vis-à-vis des variations des paramètres de la chaîne cinématique, tels que l'inertie et la raideur, et vis-à-vis des non-linéarités du système, telles que les jeux de transmission. Dans la pratique, le nombre des coefficients de réglage est ici égal à trois, ce qui simplifie considérablement le réglage du correcteur.

Ces avantages découlent des propriétés remarquables de la commande robuste d'ordre non entier, ou CRONE (marque déposée). Les caractéristiques de cette commande sont décrites en détail dans l'ouvrage "La Commande CRONE, du Scalaire au Multivariable" de A.Oustaloup et B.Mathieu, Hermes, 1999.

Avantageusement et conformément aux caractéristiques propres à la commande CRONE de troisième génération telles qu'elles sont exposées dans l'ouvrage précité, on utilise un correcteur d'ordre non entier dont la transmittance $\beta(s)$ est telle que :

$$\beta(s) = y_0 \left[ \left( \frac{\omega_g}{s} \right)^n \right]_{C_J} ,$$

avec $n \in C_j$,

où $n = a + ib$ est un ordre d'intégration non entier complexe dont la partie réelle $\alpha$ détermine le placement en phase du gabarit à la fréquence centrale $\omega_g$ et dont la partie imaginaire b détermine l'inclinaison du gabarit par rapport à la verticale, dans le plan de Nichols $C_j$, et $y_0$ est un placement en gain. Les lettres $a$, $b$ et $\omega_g$ correspondent aux coefficients de réglage du contrôleur. La fréquence centrale $\omega_g$ est relative au temps de réponse du correcteur. Elle est également utilisée dans les relations $\omega_A = \dfrac{\omega_g}{k}$ et $\omega_B = k\omega_g$, dans lesquelles $\omega_A$ et $\omega_B$ sont des fréquences extrêmes définissant la plage de fréquences sur laquelle la robustesse en performances et stabilité doit être assurée et k est un coefficient dépendant de ladite plage de fréquences.

Dans le cas d'une chaîne électromécanique présentant des résonances multiples, on associe à cette transmittance autant de filtres de réjection qu'il existe de modes résonants, comme décrit au sous chapitre 3.4 ("Cas des procédés résonants") dans l'ouvrage précité.

On obtient, de préférence, le correcteur d'ordre entier en effectuant une troncature fréquentielle en basse et haute fréquences, définie par des bornes fréquentielles basse $\omega_b$ et haute $\omega_h$ et en calculant, par approximation sur cette plage de fréquences ($\omega_b$ $\omega_h$), la transmittance équivalente d'ordre entier $C_N(s)$, à partir de la relation :

$$C_N(s) = C_0 \prod_{k=-N}^{N} \frac{1 + \dfrac{s}{\omega_k^{'}}}{1 + \dfrac{s}{\omega_k}} ,$$

dans laquelle :

$$\frac{\omega_{k+1}^{'}}{\omega_k^{'}} = \frac{\omega_{k+1}}{\omega_k} = \alpha\eta ,$$

$$\frac{\omega_{k+1}^{'}}{\omega_k} = \eta \quad \text{et} \quad \frac{\omega_k}{\omega_k^{'}} = \alpha ,$$

avec $\alpha > 1$ et $\eta > 1$, et où $C_0$ est le gain à fréquence nulle.

L'invention concerne également un dispositif de contrôle de vitesse d'une charge entraînée en rotation par un moteur électrique au travers d'une chaîne électromécanique peu amortie, comprenant des moyens de mesure de la vitesse réelle du moteur et des moyens pour déterminer une grandeur de référence $\Gamma^*$ d'actionnement en couple du moteur à partir d'un signal de vitesse $\Omega_m$ délivré par lesdits moyens de mesure de vitesse et à partir d'un signal de consigne $\boldsymbol{\Omega_L^*}$ représentatif d'une vitesse de référence de la charge, caractérisé en ce que les moyens pour déterminer ladite grandeur de référence comprennent :

- un observateur dont les entrées sont la grandeur de référence $\Gamma^*$ et une erreur d'innovation représentée par la différence pondérée entre la vitesse mesurée $\Omega_m$ du moteur et une vitesse estimée $\hat{\Omega}_m$ du moteur, l'observateur étant apte à calculer une vitesse estimée $\hat{\Omega}_L$ de la charge et la différence entre la vitesse de référence $\boldsymbol{\Omega_L^*}$ de la charge et la vitesse estimée $\hat{\Omega}_L$ de la charge;
- un correcteur robuste d'ordre non entier, de type CRONE, utilisant comme entrée la différence calculée entre la vitesse de référence $\boldsymbol{\Omega_L^*}$ de la charge et la vitesse estimée $\hat{\Omega}_L$ de la charge et dont la réalisation physique est assurée par un correcteur d'ordre entier, obtenu par approximation dans le domaine fréquentiel.

On décrira à présent, à titre d'exemple non limitatif, un mode de réalisation préféré de l'invention, en se référant aux dessins annexés, dans lesquels :

- la figure 1, déjà décrite, représente schématiquement un système d'asservissement en boucle fermée selon l'art antérieur ;
- la figure 2 est une vue comparable à la figure 1, qui représente schématiquement un système d'asservissement intégrant un dispositif de contrôle de vitesse angulaire de la charge conforme à l'invention ;
- la figure 3 est un schéma bloc qui représente plus en détail le correcteur CRONE du dispositif de contrôle selon l'invention ;
- la figure 4 représente très schématiquement une maquette de chaîne électromécanique utilisée pour tester le dispositif de contrôle selon l'invention ;
- la figure 5 représente, en A, la courbe d'évolution de la vitesse $\Omega_L$ de la charge entraînée par la chaîne électromécanique de la figure 4 (en unités réduites) en fonction du temps t (en secondes) et, en B, la courbe d'évolution du couple d'actionnement $\Gamma^*$ (en unités réduites) délivré par le correcteur en fonction du temps t, dans le cas où l'on utilise un correcteur PI de l'art antérieur et un montage tel qu'illustré sur la figure 1 ;
- la figure 6 représente, en A', la courbe d'évolution de la vitesse $\Omega_L$ de la charge entraînée par la chaîne électromécanique de la figure 4 (en unités réduites) en fonction du temps t (en secondes) et, en B', la courbe d'évolution du couple d'actionnement $\Gamma^*$ (en unités réduites) délivré par le correcteur en fonction du temps t, dans le cas où l'on associe un observateur (filtre de Kalman) à un correcteur CRONE non entier, conformément à l'invention et selon le montage illustré sur la figure 2 ;
- la figure 7 représente les fonctions de transfert (amplitude du signal, en dB, en fonction de la fréquence, en Hz) de la chaîne cinématique correspondant à la maquette de la figure 4, respectivement dans le cas où les inerties présentent leurs valeurs nominales (courbe C) et dans deux cas extrêmes de variation desdites inerties (courbes D et E) ; et
- la figure 8 représente les courbes A' et B' de la figure 6 dans le cas où les inerties présentent leurs valeurs nominales et dans deux cas extrêmes de variation desdites inerties, sur la maquette de la figure 4.

Comme l'illustre très schématiquement la figure 2, un dispositif de contrôle de vitesse conforme à l'invention est conçu pour contrôler la vitesse de rotation d'une charge 10 entraînée en rotation par l'intermédiaire d'une chaîne électromécanique. Ladite chaîne électromécanique comprend un actionneur de couple 12 qui entraîne la charge 10 en rotation au travers d'une chaîne cinématique 13. L'actionneur de couple 12 comporte un moteur électrique 14 couplé à un convertisseur de puissance 16.

Par hypothèse, la chaîne électromécanique est peu amortie et il n'existe pas de moyen de mesure de la vitesse mécanique de la charge 10.

Conformément à l'invention, le contrôle de la vitesse de rotation de la charge 10 est assuré en associant un observateur 18 et un correcteur 20 d'ordre non entier, de type CRONE.

De façon plus précise, l'observateur 18 a pour fonction de calculer une vitesse de rotation estimée $\hat{\Omega}_L$ de la charge 10. A cet effet, l'observateur 18 reçoit sur une première entrée un premier signal $\Gamma^*$, représentatif d'une grandeur de référence d'actionnement en couple du moteur 14. L'observateur 18 calcule en 22 une erreur d'innovation, représentée par la différence entre la vitesse angulaire réelle $\Omega_m$ du moteur 14 et une vitesse angulaire estimée $\hat{\Omega}_m$ du moteur 14.

Cette différence est pondérée par un coefficient de pondération K, comme représenté en 24 sur la figure 2.

La grandeur de référence d'actionnement en couple du moteur, représentée par le premier signal $\Gamma^*$, correspond à un couple d'actionnement désiré du moteur 14. Le premier signal $\Gamma^*$ est prélevé directement à la sortie du correcteur CRONE 20 avant d'être injecté dans l'actionneur de couple 12.

Pour simplifier, on appelle "vitesse angulaire réelle $\Omega_m$ du moteur" la vitesse de rotation de l'arbre de sortie du moteur 14. Cette vitesse peut être mesurée par tout moyen connu tel qu'un capteur de vitesse 26, sans sortir du cadre de l'invention, un signal représentatif de la vitesse angulaire réelle $\Omega_m$ du moteur est reçu sur une deuxième entrée de l'observateur 18.

L'observateur 18 intègre un modèle dynamique 28 qui calcule la vitesse de rotation estimée $\hat{\Omega}_L$ de la charge 10 ainsi que la vitesse angulaire estimée $\hat{\Omega}_m$ du moteur 14, utilisée pour calculer l'erreur d'innovation. A cet effet, l'observateur 18 reconstitue la chaîne électromécanique et assure un recalage permanent des états du système par le calcul de l'erreur d'innovation en 22.

Ce modèle dynamique repose sur la représentation interne du système, habituellement exprimée par les équations :

$$\begin{cases} \dot{\hat{X}} = A\hat{X} + BU + K(\hat{Y} - Y) \\ \hat{Y} = C\hat{X} + DU \end{cases}$$

Dans ces équations, $U$ représente le vecteur des entrées de la chaîne électromécanique, $X$ représente un élément de l'espace d'état du système, $Y$ représente le vecteur des sorties du système et $A$, $B$, $C$ et $D$ sont des matrices dont les coefficients sont des nombres réels. Les symboles $\hat{X}$ et $\hat{Y}$ représentent les valeurs estimées de $X$ et $Y$ obtenues par la mise en oeuvre du modèle.

Dans la pratique, l'observateur 18 peut notamment être constitué par un filtre de Kalman. Dans ce cas, les calculs s'effectuent de façon linéaire et en temps discret. Ce type d'observateur a notamment pour avantage d'être à variances minimales. Toutefois, tout autre observateur permettant d'obtenir des résultats comparables, tel qu'un filtre de Luenberger, peut être utilisé sans sortir du cadre de l'invention.

Afin d'assurer une représentation fidèle de l'état interne du système, le modèle prend en compte le modèle électromagnétique et le modèle mécanique de la chaîne électromécanique, ainsi que les perturbations intervenant sur le couple résistant appliqué à la charge.

Ainsi, la représentation de l'actionneur de couple 12 comprenant le convertisseur de puissance 16 et le moteur 14 est faite par un premier modèle d'état équivalent en continu, dont l'évolution libre est représentée par :

$$\left[\dot{X}_{AE}\right] = \left[A_{AE}\right]\left[X_{AE}\right].$$

De façon comparable, la chaîne cinématique 13 est représentée par un deuxième modèle d'état équivalent en continu, dont l'évolution libre est représentée par :

$$\left[\dot{X}_{CC}\right] = \left[A_{CC}\right]\left[X_{CC}\right].$$

L'interconnexion des deux blocs ainsi définis conduit à représenter la chaîne électromécanique sous une forme dont l'évolution libre est représentée par :

$$\begin{bmatrix} \dot{X}_{CC} \\ \dot{X}_{AE} \end{bmatrix} = \begin{bmatrix} [A_{CC}] & \begin{bmatrix} couplage \\ 1/2 \\ [A_{AE}] \end{bmatrix} \\ [0] & \end{bmatrix} \begin{bmatrix} X_{CC} \\ X_{AE} \end{bmatrix}.$$

Dans cette relation, l'expression "*couplage*1/2" désigne une matrice de coefficients de couplage entre l'actionneur de couple 12 et la chaîne cinématique 13.

Afin de prendre également en compte les perturbations du couple $\Gamma_L$ appliqué à la charge, on prend pour hypothèse que $\Gamma_L = 0$.

Le système peut alors être décliné sous la forme d'un modèle dynamique tel que la réponse à l'entrée consigne de couple $\Gamma^*$ peut être représentée par :

$$
\begin{bmatrix} \dot{X}_{CC} \\ \dot{X}_{AE} \\ \dot{\Gamma}_L \end{bmatrix} = \begin{bmatrix} [A_{CC}] & \begin{bmatrix} couplage \\ 1/2 \end{bmatrix} & \begin{bmatrix} couplage \\ 1et2/3 \end{bmatrix} \\ [0] & [A_{AE}] & \begin{bmatrix} couplage \\ 1et2/3 \end{bmatrix} \\ [0] & [0] & [0] \end{bmatrix} \begin{bmatrix} X_{CC} \\ X_{AE} \\ \Gamma_L \end{bmatrix} + \begin{bmatrix} B \\ 0 \end{bmatrix} \Gamma^* .
$$

Dans cette relation, l'expression "*couplage*1*et*2/3" désigne une matrice de coefficients de couplage entre l'ensemble formé par l'actionneur de couple 12 et la chaîne cinématique 13, et la charge 10. Les coefficients des matrices de couplage "*couplage*1/2" et "*couplage*1*et*2/3" ainsi que les différents coefficients des matrices $A_{CC}$, $A_{AE}$ et $B$ sont définis par l'homme du métier en fonction des caractéristiques respectives de la chaîne cinématique 13, de l'actionneur de couple 12 et des perturbations du couple résistant appliqué à la charge 10. On conçoit que cette opération découle de la simple mise en oeuvre des connaissances de base d'un spécialiste de l'automatique.

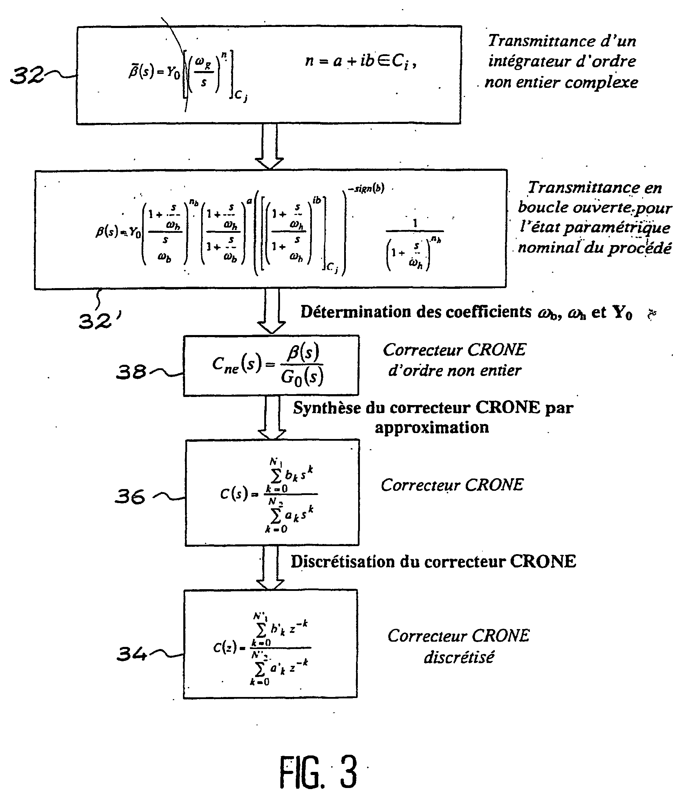

Comme on l'a représenté schématiquement sur la figure 3, le correcteur 20 comporte un correcteur robuste 32 d'ordre non entier, de type CRONE, dont la réalisation physique est assurée par un correcteur d'ordre entier 34, obtenu par approximation dans le domaine fréquentiel.

Le correcteur robuste 32 d'ordre non entier est un correcteur de type CRONE de troisième génération, c'est-à-dire qu'il utilise un gabarit fréquentiel d'ordre non entier généralisé. La transmittance $\beta(s)$ de ce gabarit est donnée par la relation :

$$
\beta(s) = y_0 \left[ \left( \frac{\omega_g}{s} \right)^n \right]_{C_j}, \quad \text{avec} \quad n \in C_j, \tag{1}
$$

dans laquelle $n$ est un ordre d'intégration non entier complexe, tel que $n = a + ib$. Les coefficients $a$ et $b$ ainsi que le terme $\omega_g$ constituent les seuls coefficients de réglage du gabarit fréquentiel utilisé par le correcteur robuste 32. En d'autres termes, le réglage du correcteur est effectué dès lors que les valeurs de ces trois coefficients sont établies. Cette caractéristique constitue un avantage essentiel de l'invention puisqu'elle autorise un réglage pratiquement aussi simple que dans le cas où l'on utilise un correcteur non robuste tel qu'un correcteur de type PI ou PID.

La partie réelle $a$ de $n$ détermine le placement en phase du gabarit à la fréquence centrale $\omega_g$, dans le plan de Black ou de Nichols, désigné par $C_j$. La partie imaginaire $b$ détermine l'inclinaison du gabarit par rapport à la verticale dans ledit plan.

Dans la relation (1) ci-dessus, $y_0$ représente un placement en gain. La fréquence centrale $\omega_g$ est relative au temps de réponse du contrôleur. Elle est également utilisée pour déterminer les fréquences $\omega_A = \dfrac{\omega_g}{k}$ et $\omega_B = k\omega_g$, avec $\omega \in [\omega_A, \omega_B]$. En d'autres termes, les lettres $\omega_A$ et $\omega_B$ désignent les fréquences extrêmes définissant la plage de fréquences sur laquelle la robustesse en performances et stabilité doit être assurée. Enfin, la lettre $k$ désigne un coefficient qui dépend de ladite plage de fréquences définie entre $\omega_A$ et $\omega_B$.

Pour plus de détails concernant le correcteur robuste 32 et la synthèse de celui-ci, on se reportera utilement à l'ouvrage de Alain Oustaloup et Benoît Mathieu déjà cité, et notamment au Chapitre 2 intitulé : "Commande CRONE de troisième génération".

Lorsque la chaîne électromécanique présente des résonances multiples, on associe à la transmittance $\beta(s)$ du gabarit fréquentiel généralisé autant de filtres de réjection qu'il existe de modes résonants dans ladite chaîne. On se reportera utilement à sujet au sous chapitre 3.4 de l'ouvrage d'Alain Oustaloup et Benoît Mathieu déjà cité et incorporé ici par référence.

Le correcteur d'ordre entier 34 constitue un correcteur monovariable robuste. Il fonctionne en temps discret avec une période d'échantillonnage pouvant être supérieure ou égale à celle de l'observateur 18. Ainsi, dans le mode de réalisation décrit ici à titre d'exemple, la période d'échantillonnage du correcteur d'ordre entier 34 est cinq fois plus longue que celle de l'observateur 18.

Le correcteur d'ordre entier 34 reçoit un signal représentatif de la différence (repère 30 sur la figure 2) entre une vitesse de référence $\Omega_L^*$ de la charge 10 et la vitesse estimée $\hat{\Omega}_L$ de la charge. La vitesse de référence $\Omega_L^*$ de la charge 10 représente la vitesse de rotation désirée ou de consigne de la charge. La vitesse estimée $\hat{\Omega}_L$ de la charge 10 est fournie par l'observateur 18. Sur la base de cette différence, le correcteur d'ordre entier 34 délivre un signal $\Gamma^*$ représentatif du couple qui doit être appliqué sur le moteur 14 par le convertisseur de puissance 16.

La détermination du correcteur discret d'ordre entier 34 s'effectue en réalisant tout d'abord, si nécessaire, une troncature fréquentielle en basse et haute fréquences au correcteur d'ordre non entier 32, par l'intermédiaire d'une transmittance d'ordre entier $\beta_b(s,\omega_b)$ définie par une borne fréquentielle basse $\omega_b$ et d'une transmittance d'ordre entier $\beta_h(s,\omega_h)$ définie par une borne fréquentielle haute $\omega_h$. Ces deux bornes fréquentielles peuvent être réparties symétriquement par rapport aux fréquences extrêmes $\omega_A$ et $\omega_B$ du gabarit généralisé, de façon telle que $\omega_b = \dfrac{\omega_A}{K'}$ et $\omega_h = K'\omega_B$, $K'$ étant un coefficient, par exemple égal à 10, tel que $\dfrac{\omega_g}{\omega_b} >> 1$ et $\dfrac{\omega_g}{\omega_h} << 1$. Cette troncature fréquentielle permet de désensibiliser le correcteur 32 par rapport aux hautes fréquences (exemple : bruits de mesures) et d'assurer une erreur statique nulle. Pour plus de détails à ce sujet, on se reportera utilement à l'ouvrage d'Alain Oustaloup et Benoît Mathieu déjà cité (voir notamment le diagramme de Bode de la figure 1.3). Le calcul des coefficients de réglage du correcteur est alors effectué sur la base du correcteur d'ordre non entier tronqué en fréquences 32' (figure 3).

Le correcteur d'ordre entier 36 est alors déterminé par une approximation dans le domaine fréquentiel du correcteur non entier 32'. La transmittance $C_N(s)$ du correcteur d'ordre entier 36 est alors donnée par la relation :

$$C_N(s) = C_0 \prod_{k=-N}^{N} \frac{1+\dfrac{s}{\omega_k'}}{1+\dfrac{s}{\omega_k}}, \qquad (2)$$

dans laquelle :

$$\frac{\omega_{k+1}'}{\omega_k'} = \frac{\omega_{k+1}}{\omega_k} = \alpha\eta,$$

$$\frac{\omega_{k+1}'}{\omega_k} = \eta \quad \text{et} \quad \frac{\omega_k}{\omega_k'} = \alpha,$$

avec $\alpha > 1$ et $\eta > 1$ et où $C_0$ représente le gain à fréquence nulle.

Le correcteur d'ordre entier 36 est alors discrétisé, sur la base d'une fréquence d'échantillonnage pouvant être supérieure ou égale à celle de l'observateur 18, afin d'obtenir le correcteur discret d'ordre entier 34 qui sera utilisé dans le calculateur temps réel.

L'observateur 18 ainsi que les correcteurs 32, 32',34 et 36 utilisent un ou plusieurs calculateurs.

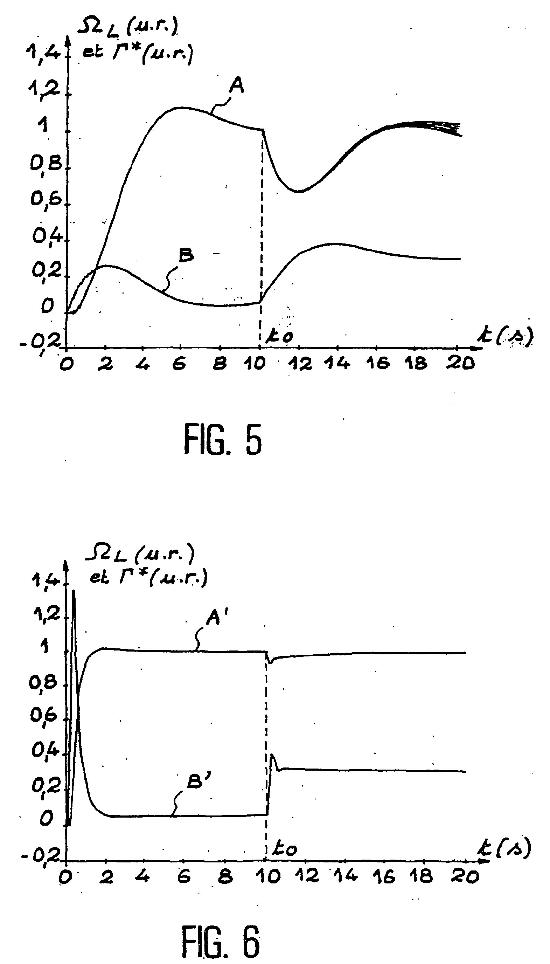

Comme on l'a représenté sur la figure 4, une maquette a été réalisée afin de valider par des essais, sur un cas concret, les résultats obtenus par la mise en oeuvre du procédé de contrôle de vitesse selon l'invention. Plus précisément, des essais comparatifs ont été effectués sur la maquette de la figure 4, en utilisant successivement un correcteur PI de l'art antérieur et un ensemble observateur correcteur de type CRONE, conformément à l'invention.

La maquette utilisée pour les essais comprenait un premier moteur 114, "pilote de vitesse", comparable au moteur 14 sur la figure 2. Le moteur 114 était relié mécaniquement à un deuxième moteur 110, "de charge", par l'intermédiaire d'une chaîne cinématique 113 comprenant une première allonge 113A, une première masse d'inertie 113B, une deuxième allonge 113C, une deuxième masse d'inertie 113D, une troisième allonge 113E intégrant un jeu 113F et une troisième masse d'inertie 113G.

Dans la maquette ainsi réalisée, le moteur 110 jouait le rôle de la charge 10 sur la figure 2 et la chaîne cinématique 113 celui de la chaîne 13.

Chacun des moteurs 114 et 110 avait une inertie de 0,00488 $m^2*kg$ et les raideurs des allonges 113A, 113C et 113E étaient respectivement de 357 N*m/rad, 175 N∗m/rad et 78 N∗m/rad. Enfin, les inerties nominales des masses d'inertie 113B, 113D et 113G étaient respectivement égales à 0,014 $m^2*kg$, 0,03 $m^2*kg$ et 0,068 $m^2*kg$, tout en pouvant simuler des erreurs importantes faisant varier ces inerties entre la moitié et le double de leurs valeurs nominales.

Les essais effectués sur cette maquette en utilisant un correcteur PI de l'art antérieur sont illustrés par les courbes A et B sur la figure 5. Plus précisément, la courbe A montre l'évolution de la vitesse de rotation $\Omega_L$ de la charge (en unités réduites) en fonction du temps t (en secondes) et la courbe B montre l'évolution du couple $\Gamma^*$ délivré par le correcteur (en unités réduites) en fonction du temps t (en secondes). On voit qu'une perturbation du couple de charge à l'instant $t_0$ se traduit notamment par une période relativement longue avant le retour à l'équilibre et par une entrée en résonance du système.

Comme l'illustrent les courbes A' et B' sur la figure 6, la situation est très différente lorsque le dispositif de contrôle de vitesse selon l'invention est utilisé. Plus précisément, la courbe A' montre l'évolution de la vitesse de rotation $\Omega_L$ de la charge (en unités réduites) en fonction du temps t (en secondes) et la courbe B' montre l'évolution du couple $\Gamma^*$ délivré par le correcteur (en unités réduites) en fonction du temps t (en secondes). On voit que, dans ce cas, le système revient très rapidement à l'équilibre après la survenance d'une perturbation du couple de charge au temps $t_0$. De plus, il ne se produit aucun phénomène de résonance, contrairement à l'art antérieur.

Les courbes de la figure 6 montrent que le dispositif de contrôle de vitesse selon l'invention présente bien les capacités d'amortissement recherchées, en présence de fréquences de résonance dans la chaîne électromécanique.

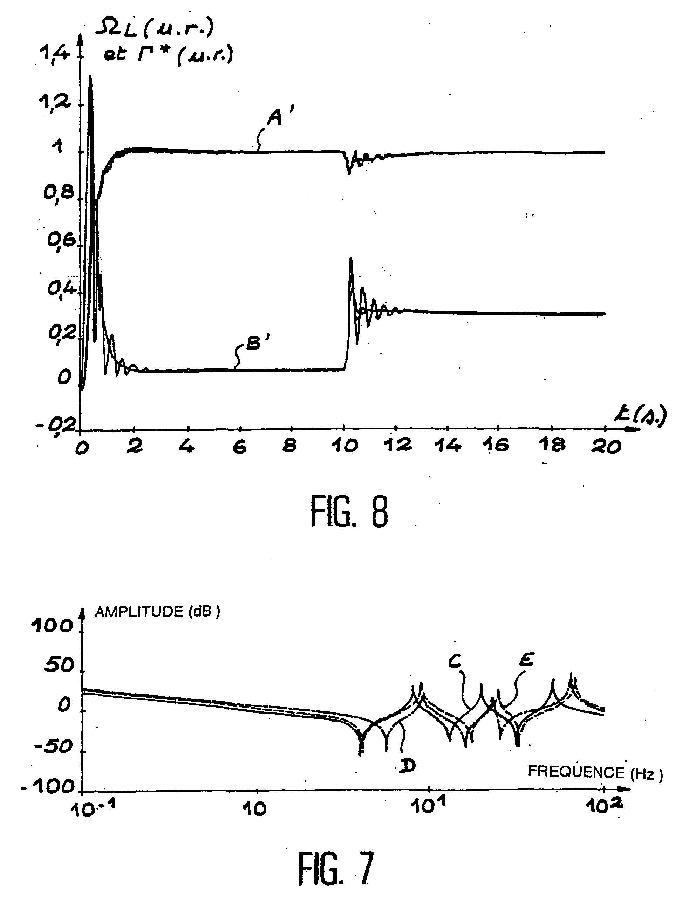

Une autre série d'essais a été effectuée pour mettre en évidence les capacités de robustesse du dispositif de contrôle de vitesse selon l'invention. Ces essais sont illustrés par les figures 7 et 8.

Sur la figure 7, on a représenté la fonction de transfert de la chaîne électromécanique de la maquette illustrée sur la figure 4, c'est-à-dire l'évolution de l'amplitude du signal (en dB) en fonction de la fréquence (en Hz), respectivement dans le cas où les inerties des masses 113B, 113D et 113G sont nominales (courbe C), dans le cas où les inerties de la première masse 113B et de la troisième masse 113G sont divisées par deux et celle de la deuxième masse 113D est multipliée par deux (courbe D) et dans le cas où les inerties de la première masse 113B et de la troisième masse 113G sont divisées par deux et celle de la deuxième masse 113D est nominale (courbe E). On voit que les fréquences de résonances de la chaîne électromécanique sont modifiées de façon sensible.

Sur la figure 8, on a porté les courbes A' et B' obtenues dans les cas correspondant aux fonctions de transfert illustrées en C, D et E sur la figure 7. On voit que, malgré les importantes variations des inerties et des fréquences de résonance qui en découlent, le système en boucle fermée reste stable.

Ces expérimentations confirment donc que le procédé de contrôle de vitesse conforme à l'invention présente d'excellentes propriétés de robustesse malgré l'absence de mesure de la vitesse contrôlée, contrairement aux procédés de l'art antérieur utilisant des correcteurs PI.

De plus, l'association d'un observateur et d'un correcteur de type CRONE, conformément à l'invention, permet d'obtenir ces propriétés de robustesse avec seulement trois coefficients de réglage (les parties réelle *a* et imaginaire *b* de l'ordre d'intégration non entier complexe *n* et la fréquence $\omega_g$).

Bien entendu, le procédé et le dispositif selon l'invention peuvent s'appliquer à tout système comprenant une charge entraînée en rotation par une chaîne électromécanique peu amortie, quelle que soit la nature de la charge et quelles que soient les caractéristiques de la chaîne électromécanique, et notamment ses fréquences de résonance et ses jeux éventuels.

**Revendications**

1. Procédé de contrôle de vitesse d'une charge (10) entraînée en rotation par un moteur électrique (12) au travers d'une chaîne électromécanique (13) peu amortie, selon lequel on mesure la vitesse réelle du moteur (12) et on détermine une grandeur de référence $\Gamma^*$ d'actionnement en couple du moteur (12) à partir de la vitesse mesurée $\Omega_m$ du moteur et d'une vitesse de référence $\boldsymbol{\dot{\Omega}_L}$ de la charge (10), **caractérisé en ce qu'**on détermine ladite grandeur de référence $\Gamma^*$ :

   - en calculant une vitesse estimée $\hat{\Omega}_L$ de la charge par un observateur (18) dont les entrées sont la grandeur de référence $\Gamma^*$ et une erreur d'innovation représentée par la différence pondérée entre la vitesse mesurée $\Omega_m$

du moteur (12) et une vitesse estimée $\hat{\Omega}_m$ du moteur ;
- en calculant la différence entre la vitesse de référence $\Omega_L^*$ de la charge (10) et la vitesse estimée $\hat{\Omega}_L$ de la charge ; et
- en utilisant la différence ainsi calculée comme entrée d'un correcteur robuste d'ordre non entier (20), de type CRONE, dont la réalisation physique est assurée par un correcteur d'ordre entier, obtenu par approximation dans le domaine fréquentiel.

2. Procédé selon la revendication 1, dans lequel on calcule la vitesse estimée $\Omega_L$ de la charge (10) à partir d'un modèle dynamique de la chaîne électromécanique (13).

3. Procédé selon la revendication 2, dans lequel on utilise un modèle dynamique qui prend en compte le modèle électromagnétique, le modèle mécanique et les perturbations du couple de la charge (10).

4. Procédé selon la revendication 3, dans lequel on utilise un modèle dynamique tel que :

$$\begin{bmatrix} \dot{X}_{CC} \\ \dot{X}_{AE} \\ \dot{\Gamma}_L \end{bmatrix} = \begin{bmatrix} [A_{CC}] & \begin{bmatrix} couplage \\ 1/2 \end{bmatrix} & \begin{bmatrix} couplage \\ 1et2/3 \end{bmatrix} \\ [0] & [A_{AE}] & \begin{bmatrix} couplage \\ 1et2/3 \end{bmatrix} \\ [0] & [0] & [0] \end{bmatrix} \begin{bmatrix} X_{CC} \\ X_{AE} \\ \Gamma_L \end{bmatrix} + \begin{bmatrix} B \\ 0 \end{bmatrix} \Gamma^* ,$$

dans lequel $A_{CC}$, $A_{AE}$ et $B$ sont des matrices de coefficients affectées respectivement à la chaîne cinématique (16), à l'actionneur électrique (12, 14) et à la nature de la perturbation du couple résistant appliqué à la charge (10), $X_{cc}$, $X_{AE}$ et $\Gamma_L$ représentant respectivement des états de la chaîne cinématique, de l'actionneur électrique et du couple résistant appliqué à la charge, et les expressions *"couplage*1/2*"* et *"couplage*1*et*2/3*"* désignent respectivement des matrices de coefficients de couplage entre l'actionneur électrique et la chaîne cinématique et entre l'ensemble actionneur électrique-chaîne cinématique et la charge.

5. Procédé selon l'une quelconque des revendications 2 à 4, dans lequel on utilise un filtre de Kalman en temps discret comme observateur (18).

6. Procédé selon l'une quelconque des revendications 1 à 5, dans lequel on utilise un correcteur d'ordre non entier dont la transmittance $\beta(s)$ est telle que :

$$\beta(s) = y_0 \left[ \left( \frac{\omega_g}{s} \right)^n \right]_{C_J} ,$$

avec $n \in C_j$,
où $n = a + ib$ est un ordre d'intégration non entier complexe dont la partie réelle $a$ détermine le placement en phase du gabarit à la fréquence $\omega_g$ et dont la partie imaginaire $b$ détermine l'inclinaison du gabarit par rapport à la verticale, dans le plan de Nichols $C_j$, $y_0$ étant un placement en gain et la fréquence $\omega_g$ étant relative au temps de réponse du correcteur et étant également utilisée dans des relations $\omega_A = \dfrac{\omega_g}{k}$ et $\omega_B = k\omega_g$, dans lesquelles $\omega_A$ et $\omega_B$ sont des fréquences extrêmes définissant une plage de fréquences sur laquelle la robustesse en performances et stabilité doit être assurée et $k$ est un coefficient dépendant de ladite plage de fréquences.

7. procédé selon la revendication 6, dans lequel, la chaîne électromécanique (13) présentant des résonances multiples, on associe à la transmittance $\beta(s)$ autant de filtres de réjection qu'il existe de modes résonants dans ladite chaîne.

**8.** Procédé selon l'une quelconque des revendications 6 et 7, dans lequel on obtient le correcteur d'ordre entier en effectuant une troncature fréquentielle en basse et haute fréquences, définie par des bornes fréquentielles basse $\omega_b$ et haute $\omega_h$ et en calculant, par approximation sur cette plage de fréquences $\omega_b$ $\omega_h$, la transmittance équivalente d'ordre entier $C_N(s)$, à partir de la relation :

$$C_N(s) = C_0 \prod_{k=-N}^{N} \frac{1 + \dfrac{s}{\omega_k'}}{1 + \dfrac{s}{\omega_k}} \, ,$$

dans laquelle :

$$\frac{\omega_{k+1}'}{\omega_k'} = \frac{\omega_{k+1}}{\omega_k} = \alpha\eta \, ,$$

$$\frac{\omega_{k+1}'}{\omega_k} = \eta \quad \text{et} \quad \frac{\omega_k}{\omega_k'} = \alpha \, ,$$

avec $\alpha > 1$ et $\eta > 1$ et où $C_0$. est le gain à fréquence nulle.

**9.** Dispositif de contrôle de vitesse d'une charge (10) entraînée en rotation par un moteur électrique (12) au travers d'une chaîne électromécanique (13) peu amortie, comprenant des moyens de mesure (26) de la vitesse réelle du moteur (12) et des moyens pour déterminer une grandeur de référence $\Gamma^*$ d'actionnement en couple du moteur (12) à partir d'un signal de vitesse $\Omega_m$ délivré par lesdits moyens de mesure de vitesse (26) et à partir d'un signal de consigne $\Omega_L^*$ représentatif d'une vitesse de référence de la charge (10), **caractérisé en ce que** les moyens pour déterminer ladite grandeur de référence comprennent :

- un observateur (18) dont les entrées sont la grandeur de référence $\Gamma^*$ et une erreur d'innovation représentée par la différence pondérée entre la vitesse mesurée $\Omega_m$ du moteur (12) et une vitesse estimée $\hat{\Omega}_m$ du moteur, l'observateur (18) étant apte à calculer une vitesse estimée $\hat{\Omega}_L$ de la charge et la différence entre la vitesse de référence $\Omega_L^*$ de la charge (10) et la vitesse estimée $\hat{\Omega}_L$ de la charge ;
- un correcteur robuste d'ordre non entier (20), de type CRONE, utilisant comme entrée la différence calculée entre la vitesse de référence $\Omega_L^*$ de la charge (10) et la vitesse estimée $\hat{\Omega}_L$ de la charge et dont la réalisation physique est assurée par un correcteur d'ordre entier, obtenu par approximation dans le domaine fréquentiel.

**10.** Dispositif selon la revendication 9, dans lequel l'observateur (18) calcule la vitesse estimée $\hat{\Omega}_L$ de la charge (10) à partir d'un modèle dynamique de la chaîne électromécanique (13).

**11.** Dispositif selon la revendication 10, dans lequel le modèle dynamique intègre trois blocs matriciels interconnectés, prenant respectivement en compte le modèle électromagnétique, le modèle mécanique et les perturbations du couple de la charge (10).

**12.** Dispositif selon l'une quelconque des revendications 9 à 11, dans lequel l'observateur (18) est un filtre de Kalman en temps discret.

**13.** Dispositif selon l'une quelconque des revendications 9 à 12, dans lequel le correcteur d'ordre non entier (20) présente une transmittance d'ordre non entier $\beta(s)$ telle que :

$$\beta(s) = y_0 \left[ \left( \frac{\omega_g}{s} \right)^n \right]_{C_j} ,$$

avec $n \in C_j$,

où $n = a + ib$ est un ordre d'intégration non entier complexe dont la partie réelle $a$ détermine le placement en phase du gabarit à la fréquence $\omega_g$ et dont la partie imaginaire $b$ détermine l'inclinaison du gabarit par rapport à la verticale, dans le plan de Nichols $C_j$, $y_0$ étant un placement en gain et la fréquence $\omega_g$ étant relative au temps de réponse du correcteur et étant également utilisée dans des relations $\omega_A = \dfrac{\omega_g}{k}$ et $\omega_B = k\omega_g$, dans lesquelles $\omega_A$ et $\omega_B$ sont des fréquences extrêmes définissant une plage de fréquences sur laquelle la robustesse en performances et stabilité doit être assurée et k est un coefficient dépendant de ladite plage de fréquences.

14. Dispositif selon la revendication 13, dans lequel la chaîne électromécanique présente des résonances multiples et le correcteur (20) intègre autant de filtres de réjection que ladite chaîne présente de modes résonants.

15. Dispositif selon l'une quelconque des revendications 13 et 14, dans lequel le correcteur d'ordre entier effectue une troncature fréquentielle en basse et haute fréquences, définie par des bornes fréquentielles basse $\omega_b$ et haute $\omega_h$, et présente une transmittance d'ordre entier $C_N(s)$, telle que :

$$C_N(s) = C_0 \prod_{k=-N}^{N} \frac{1 + \dfrac{s}{\omega_k'}}{1 + \dfrac{s}{\omega_k}} ,$$

dans laquelle :

$$\frac{\omega_{k+1}'}{\omega_k'} = \frac{\omega_{k+1}}{\omega_k} = \alpha\eta ,$$

$$\frac{\omega_{k+1}'}{\omega_k} = \eta \quad \text{et} \quad \frac{\omega_k}{\omega_k'} = \alpha ,$$

avec $\alpha > 1$ et $\eta > 1$ et où $C_0$ est le gain à fréquence nulle.

**Claims**

1. Method of controlling the speed of a load (10) which is driven in rotation by an electric motor (12) via a slightly damped electromechanical train (13), according to which method the actual speed of the motor (12) is measured, and a reference magnitude $\Gamma^*$ of torque actuation of the motor (12) is determined from the measured speed $\Omega_m$ of the motor and a reference speed $\overset{*}{\Omega}_L$ of the load (10), **characterized in that** the said reference magnitude $\Gamma^*$ is determined by:

- calculating an estimated speed $\hat{\Omega}_L$ of the load by an observer (18), the inputs of which are the reference magnitude $\Gamma^*$ and an innovation error represented by the weighted difference between the measured speed

$\Omega_m$ of the motor (12) and an estimated speed $\hat{\Omega}_m$ of the motor;
- calculating the difference between the reference speed $\dot{\Omega_L}$ of the load (10) and the estimated speed $\hat{\Omega}_L$ of the load; and
- using the thus calculated difference as the input to a robust corrector of non-integer order (20), of CRONE type, the physical implementation of which is provided by a corrector of integer order, which is obtained by approximation in the frequency domain.

2. Method according to Claim 1, in which the estimated speed $\hat{\Omega}_L$ of the load (10) is calculated from a dynamic model of the electromechanical train (13) .

3. Method according to Claim 2, in which a dynamic model which takes account of the electromagnetic model, the mechanical model and the disturbances of the torque of the load (10) is used.

4. Method according to Claim 3, in which a dynamic model such as:

$$
\begin{bmatrix} \dot{X}_{CC} \\ \dot{X}_{AE} \\ \dot{\Gamma}_L \end{bmatrix} = \begin{bmatrix} [A_{CC}] & [coupling 1/2] & [coupling 1 and 2/3] \\ [0] & [A_{AE}] & [coupling 1 and 2/3] \\ [0] & [0] & [0] \end{bmatrix} \begin{bmatrix} X_{CC} \\ X_{AE} \\ \Gamma_L \end{bmatrix} + \begin{bmatrix} B \\ 0 \end{bmatrix} \Gamma * ,
$$

is used, where $A_{CC}$, $A_{AE}$ and B are matrices of coefficients, and are assigned respectively to the drive train (16), the electrical actuator (12, 14) and the type of disturbance of the resistant torque which is applied to the load (10), and $X_{CC}$, $X_{AE}$ and $\Gamma_L$ represent respectively the states of the drive train, of the electrical actuator and of the resistant torque which is applied to the load, and the expressions "coupling1/2" and "coupling1and2/3" designate the coupling coefficient matrices between the electrical actuator and the drive train and between the electrical actuator-drive train assembly and the load respectively.

5. Method according to any one of Claims 2 to 4, in which a Kalman filter is used in discrete time as the observer (18).

6. Method according to any one of Claims 1 to 5, in which a corrector is used, it is of non-integer order, and its transmittance $\beta(s)$ is such that:

$$
\beta(s) = y_0 \left[ \left( \frac{\varpi_g}{s} \right)^n \right]_{C_j} ,
$$

where $n \in C_j$,
where n = a+ib is a complex non-integer order of integration of which the real part a determines the phase placing of the template at frequency $\omega_g$, and of which the imaginary part b determines the inclination of the template in relation to the vertical, in the Nichols plan $C_j$, $y_0$ being a gain placing and the frequency $\omega_g$ being relative to the response time of the corrector and being also used in the relations $\varpi_A = \frac{\varpi_g}{k}$ and $\varpi_B = k \varpi_g$, in which $\omega_A$ and $\omega_B$ are extreme frequencies which define a range of frequencies on which robustness in performance and stability must be ensured, and k is a coefficient depending on the said range of frequencies.

7. Method according to Claim 6, in which the electromechanical train (13) has multiple resonances, and as many rejection filters are associated with the transmittance $\beta(s)$ as there are resonant modes in the said train.

8. Method according to any one of Claims 6 and 7, in which the corrector of non-integer order is obtained by carrying out a frequency truncation of low and high frequencies, defined by low and high frequency limits $\omega_b$ and $\omega_h$ respectively, and by calculating, by approximation on this frequency range $\omega_b$ $\omega_h$, the equivalent transmittance of integer order $C_n(s)$, from the relation:

$$C_N(s) = C_0 \prod_{k=-N}^{N} \frac{1 + \dfrac{s}{\varpi'_k}}{1 + \dfrac{s}{\varpi_k}} \, ,$$

where:

$$\frac{\varpi'_{k+1}}{\varpi'_k} = \frac{\varpi_{k+1}}{\varpi_k} = \alpha\eta \, ,$$

$$\frac{\varpi'_{k+1}}{\varpi_k} = \eta \quad \text{and} \quad \frac{\varpi_k}{\varpi'_k} = \alpha \, ,$$

where $\alpha > 1$, $\eta > 1$ and $C_0$ is the gain at zero frequency.

9. Device for controlling the speed of a load (10) which is driven in rotation by an electric motor (12) via a slightly damped electromechanical train (13), including means (26) of measuring the actual speed of the motor (12), and means of determining a reference magnitude $\Gamma^*$ of torque actuation of the motor (12) from a speed signal $\Omega_m$ which is supplied by the said speed measurement means (26) and an instruction signal $\overset{\bullet}{\Omega_L}$ representing a reference speed of the load (10), **characterized in that** the means of determining the said reference magnitude comprise:

- an observer (18), the inputs of which are the reference magnitude $\Gamma^*$ and an innovation error represented by the weighted difference between the measured speed $\Omega_m$ of the motor (12) and an estimated speed $\hat{\Omega}_m$ of the motor, the observer (18) being suitable for calculating an estimated speed $\hat{\Omega}_L$ of the load and the difference between the reference speed $\overset{\bullet}{\Omega_L}$ of the load (10) and the estimated speed $\hat{\Omega}_L$ of the load;
- a robust corrector of non-integer order (20), of CRONE type, using as input the calculated difference between the reference speed $\overset{\bullet}{\Omega_L}$ of the load (10) and the estimated speed $\hat{\Omega}_L$ of the load, and the physical implementation of which is provided by a corrector of integer order, which is obtained by approximation in the frequency domain.

10. Device according to Claim 9, in which the observer (18) calculates the estimated speed $\hat{\Omega}_L$ of the load (10) from a dynamic model of the electromechanical train (13).

11. Device according to Claim 10, in which the dynamic model includes three interconnected matrix blocks, taking account of the electromagnetic model, the mechanical model and the disturbances of the torque of the load (10) respectively.

12. Device according to any one of Claims 9 to 11, in which the observer (18) is a Kalman filter in discrete time.

13. Device according to any one of Claims 9 to 12, in which the corrector of non-integer order (20) has a transmittance of non-integer order $\beta(s)$ such that:

$$\beta(s) = y_0 \left[ \left( \frac{\varpi_g}{s} \right)^n \right]_{C_j} \, ,$$

where $n \in C_j$,

where n = a+ib is a complex non-integer order of integration of which the real part a determines the phase placing of the template at frequency $\omega_g$, and of which the imaginary part b determines the inclination of the template in relation to the vertical, in the Nichols plan $C_j$, $y_0$ being a gain placing and the frequency $\omega_g$ being relative to the response time of the corrector and being also used in the relations $\varpi_A = \dfrac{\varpi_g}{k}$ and $\varpi_B = k\varpi_g$, in which $\omega_A$

and $\omega_B$ are extreme frequencies which define a range of frequencies on which robustness in performance and stability must be ensured, and k is a coefficient depending on the said range of frequencies.

**14.** Device according to Claim 13, in which the electromechanical train has multiple resonances, and the corrector (20) includes as many rejection filters as the said train has resonant modes.

**15.** Device according to any one of Claims 13 and 14, in which the corrector of non-integer order carries out a frequency truncation of low and high frequencies, defined by low and high frequency limits $\omega_b$ and $\omega_h$ respectively, and has a transmittance of integer order $C_n(s)$, such that:

$$C_N(s) = C_0 \prod_{k=-N}^{N} \frac{1 + \dfrac{s}{\varpi'_k}}{1 + \dfrac{s}{\varpi_k}} \, ,$$

where:

$$\frac{\varpi'_{k+1}}{\varpi'_k} = \frac{\varpi_{k+1}}{\varpi_k} = \alpha\eta \, ,$$

$$\frac{\varpi'_{k+1}}{\varpi_k} = \eta \quad \text{and} \quad \frac{\varpi_k}{\varpi'_k} = \alpha \, ,$$

where $\alpha > 1$, $\eta > 1$ and $C_0$ is the gain at zero frequency.

**Patentansprüche**

**1.** Verfahren zur Steuerung der Geschwindigkeit einer Last (10) die durch einen Elektromotor (12) über eine schwach gedämpfte elektromechanische Kette (13) in Drehung versetzt wird, bei welchem man die tatsächliche Geschwindigkeit des Motors (12) misst und eine Bezugsgröße $\Gamma^*$ der Drehmomentsbetätigung des Motors (12) aus der gemessenen Geschwindigkeit $\Omega_m$ des Motors und einer Bezugsgeschwindigkeit $\Omega_L^*$ der Last (10) bestimmt, **dadurch gekennzeichnet, dass** man diese Bezugsgröße $\Gamma^*$ bestimmt,

- indem man eine geschätzte Geschwindigkeit $\hat{\Omega}_L$ der Last durch einen Beobachter (18) berechnet, dessen Eingänge die Bezugsgröße $\Gamma^*$ und eine Innovationsabweichung sind, die durch die gewichtete Differenz zwischen der gemessenen Geschwindigkeit $\Omega_m$ des Motors (12) und einer geschätzten Geschwindigkeit $\hat{\Omega}_m$ des Motors dargestellt wird;

- indem man die Differenz zwischen der Bezugsgeschwindigkeit $\Omega_L^*$ der Last (10) und der geschätzten Geschwindigkeit $\hat{\Omega}_L$ der Last berechnet; und

- indem man die auf diese Weise berechnete Differenz als Eingang eines robusten Entzerrers (20) nicht ganzzahliger Ordnung vom Typ CRONE verwendet, dessen physische Ausführung durch einen Entzerrer ganzzahliger Ordnung gewährleistet wird, der durch Annäherung in der Frequenzdomäne erhalten wird.

2. Verfahren nach Anspruch 1, bei dem man die geschätzte Geschwindigkeit $\hat{\Omega}_L$ der Last (10) aus einem dynamischen Modell der elektromechanischen Kette (13) errechnet.

3. Verfahren nach Anspruch 2, bei dem man ein dynamisches Modell verwendet, das das elektromagnetische Modell, das mechanische Modell und die Störungen des Drehmoments der Last (10) berücksichtigt.

4. Verfahren nach Anspruch 3, bei dem man ein dynamisches Modell von der Art

$$
\begin{bmatrix} \dot{X}_{CC} \\ \dot{X}_{AE} \\ \dot{\Gamma}_L \end{bmatrix} = \begin{bmatrix} [A_{CC}] & \begin{bmatrix} Kopplung \\ 1/2 \end{bmatrix} & \begin{bmatrix} Kopplung \\ 1 \text{ und } 2/3 \end{bmatrix} \\ [0] & [A_{AE}] & \begin{bmatrix} Kopplung \\ 1 \text{ und } 2/3 \end{bmatrix} \\ [0] & [0] & [0] \end{bmatrix} \begin{bmatrix} X_{CC} \\ X_{AE} \\ \Gamma_L \end{bmatrix} + \begin{bmatrix} B \\ 0 \end{bmatrix} \Gamma^*,
$$

verwendet, in dem $A_{cc}$, $A_{AE}$ und $B$ Matrizes von Koeffizienten sind, die der kinematischen Kette (16), dem elektrischen Antriebs (12, 14) bzw. der Natur der Störung des an die Last (10) angelegten Widerstandsmoments zugeordnet sind, wobei $X_{CC}$, $X_{AE}$ und $\Gamma_L$ Zustände der kinematischen Kette, des elektrischen Antriebs bzw. des an die Last angelegten Widerstandsmoments sind und die Ausdrücke "*Kopplung*1/2" und "*Kopplung*1*und*2/3" Matrizes von Kopplungskoeffizienten zwischen dem elektrischen Antrieb und der kinematischen Kette bzw. zwischen der Einheit elektrischer Antrieb - kinematische Kette und der Last bezeichnen.

5. Verfahren nach einem der Ansprüche 2 bis 4, bei dem man als Beobachter (18) ein Kalmanfilter in diskreter Zeit verwendet.

6. Verfahren nach einem der Ansprüche 1 bis 5, bei dem man einen Entzerrer nicht ganzzahliger Ordnung verwendet, dessen Transmittanz $\beta(s)$ von der Art

$$
\beta(s) = y_0 \left[ \left( \frac{\omega_g}{s} \right)^n \right]_{C_j},
$$

mit $n \in C_j$,

ist, worin $n=a+ib$ eine nicht ganzzahlige komplexe Integrationsordnung ist, deren realer Teil $a$ die Phasenplatzierung der Schablone bei der Frequenz $\omega_g$ bestimmt und dessen imaginärer Teil $b$ die Neigung der Schablone zur Vertikalen in der Nichols-Ebene $C_1$ bestimmt, $y_0$ eine Gewinnplatzierung ist und die Frequenz $\omega_g$ sich auf die Antwortzeit des Entzerrers bezieht und auch in Beziehungen

$$\omega_A = \frac{\omega_g}{k}$$

und $\omega_B = k\omega_g$ verwendet wird, in denen $\omega_A$ und $\omega_B$ Endfrequenzen sind, die einen Frequenzbereich begrenzen, in dem die Leistungs- und Stabilitätsrobustheit gewährleistet sein muss und $k$ ein von diesem Frequenzbereich abhängender Koeffizient ist.

7. Verfahren nach Anspruch 6, bei dem, wenn die elektromechanische Kette (13) vielfache Resonanzen aufweist, man der Transmittanz $\beta(s)$ ebenso viele Rejektionsfilter zuordnet, wie in der Kette Resonanzmoden auftreten.

8. Verfahren nach einem der Ansprüche 6 und 7, bei dem man den Entzerrer ganzzahliger Ordnung erhält, indem man eine Frequenzkürzung in niederer und hoher Frequenz vornimmt, die durch eine niedere $\omega_b$ und eine hohe $\omega_h$ Frequenzgrenze definiert ist, und indem man durch Annäherung auf diesem Frequenzbereich $\omega_b\,\omega_h$ die äquivalente Transmittanz $C_N(s)$ ausgehend von der Gleichung

$$C_N(s) = C_0 \prod_{k=-N}^{N} \frac{1 + \dfrac{s}{\omega'_k}}{1 + \dfrac{s}{\omega_k}},$$

errechnet, in der:

$$\frac{\omega'_{k+1}}{\omega'_k} = \frac{\omega_{k+1}}{\omega_k} = \alpha\eta,$$

$$\frac{\omega'_{k+1}}{\omega'_k} = \eta \quad \text{und} \quad \frac{\omega_k}{\omega'_k} = \alpha,$$

mit $a>1$ und $\eta>1$ und in der $C_0$ der Gewinn bei der Frequenz Null ist.

9. Vorrichtung zur Steuerung der Geschwindigkeit einer Last (10), die durch einen Elektromotor (12) über eine schwach gedämpfte elektromechanische Kette (13) in Drehung versetzt wird, umfassend Mittel (26) zum Messen der tatsächlichen Geschwindigkeit des Motors (12) und Mittel zum Bestimmen einer Bezugsgröße $\Gamma^*$ der Drehmomentsbetägigung des Motors (12) aus einem von diesen Geschwindigkeitsmessmitteln (26) gelieferten Geschwindigkeitssignal $\Omega_m$ und aus einem Sollwertsignal $\Omega_L{}^*$, das eine Bezugsgeschwindigkeit der Last (10) darstellt, **dadurch gekennzeichnet, dass** die Mittel zum Bestimmen der Bezugsgröße umfassen:

    - einen Beobachter (18), dessen Eingänge die Bezugsgröße $\Gamma^*$ und eine Innovationsabweichung sind, die durch die gewichtete Differenz zwischen der gemessenen Geschwindigkeit $\Omega_m$ des Motors (12) und einer geschätzten Geschwindigkeit $\hat{\Omega}_m$ des Motors dargestellt wird, wobei der Beobachter (18) eine geschätzte Geschwindigkeit $\hat{\Omega}_L$ der Last und die Differenz zwischen der Bezugsgeschwindigkeit $\Omega^*_L$ der Last (10) und der geschätzten Geschwindigkeit $\hat{\Omega}_L$ der Last berechnen kann;

    - einen robusten Entzerrer (20) nicht ganzzahliger Ordnung vom Type CRONE, der als Eingang die errechnete Differenz zwischen der Bezugsgeschwindigkeit $\Omega^*_L$ der Last (10) und der geschätzten Geschwindigkeit $\hat{\Omega}_L$ der Last verwendet und dessen physische Ausführung durch einen Entzerrer ganzzahliger Ordnung gewährleistet ist, der durch Annäherung in der Frequenzdomäne erhalten wird.

**10.** Vorrichtung nach Anspruch 9, bei der der Beobachter (18) die geschätzte Geschwindigkeit $\hat{\Omega}_L$ der Last (10) ausgehend von einem dynamischen Modell der elektromechanischen Kette (13) errechnet.

**11.** Vorrichtung nach Anspruch 10, bei der in das dynamische Modell drei miteinander verbundene Matrixblöcke integriert sind, die das elektromagnetische Modell, das mechanische Modell bzw. die Störungen des Drehmoments der Last (10) berücksichtigen.

**12.** Vorrichtung nach einem der Ansprüche 9 bis 11, bei der der Beobachter (18) ein Kalmanfilter in diskreter Zeit ist.

**13.** Vorrichtung nach einem der Ansprüche 9 bis 12, bei der der Entzerrer (20) nicht ganzzahliger Ordnung eine Transmittanz nicht ganzzahliger Ordnung β(s) von der Art

$$\beta(s) = y_0 \left[ \left( \frac{\omega_g}{s} \right)^n \right]_{C_j} ,$$

mit $n \in C_j$,
aufweist, worin $n=a+ib$ eine nicht ganzzahlige komplexe Integrationsordnung ist, deren realer Teil a die Phasenplatzierung der Schablone bei der Frequenz $\omega_g$ bestimmt und deren imaginärer Teil b die Neigung der Schablone zur Vertikalen in der Nichols-Ebene $C_1$ bestimmt, $y_0$ eine Gewinnplatzierung ist und die Frequenz $\omega_g$ sich auf die Antwortzeit des Entzerrers bezieht und auch in Beziehungen

$$\omega_A = \frac{\omega_g}{k}$$

und $\omega_B=k\omega_g$ verwendet wird, in denen $\omega_A$ und $\omega_B$ Endfrequenzen sind, die einen Frequenzbereich begrenzen, in dem die Leistungs- und Stabilitätsrobustheit gewährleistet sein muss und $k$ ein von diesem Frequenzbereich abhängender Koeffizient ist.

**14.** Vorrichtung nach Anspruch 13, bei der die elektromechanische Kette (13) vielfache Resonanzen aufweist und in den Entzerrer (20) ebenso viele Rejektionsfilter integriert sind, wie die Kette Resonanzmoden aufweist.

**15.** Vorrichtung nach einem der Ansprüche 13 und 14, bei der der Entzerrer ganzzahliger Ordnung eine Frequenzkürzung in niederer und hoher Frequenz vornimmt, die durch eine niedere $\omega_b$ und eine hohe $\omega_h$ Frequenzgrenze definiert ist, und eine Transmittanz $C_N(s)$ ganzzahliger Ordnung von der Art

$$C_N(s) = C_0 \prod_{k=-N}^{N} \frac{1 + \frac{s}{\omega_k'}}{1 + \frac{s}{\omega_k}} ,$$

aufweist, in der:

$$\frac{\omega_{k+1}'}{\omega_k'} = \frac{\omega_{k+1}}{\omega_k} = \alpha\eta,$$

$$\frac{\omega'_{k+1}}{\omega'_k} = \eta \quad \text{und} \quad \frac{\omega_k}{\omega'_k} = \alpha,$$

mit $a > 1$ und $\eta > 1$ und in der $C_0$ der Gewinn bei der Frequenz Null ist.

FIG. 1

FIG. 2

FIG. 4

$32$

$$\bar{\beta}(s) = Y_0 \left[ \left( \frac{\omega_R}{s} \right)^n \right]_{C_j} \qquad n = a + ib \in C_j ,$$

*Transmittance d'un intégrateur d'ordre non entier complexe*

$$\beta(s) = Y_0 \left( \frac{1 + \frac{s}{\omega_h}}{\frac{s}{\omega_b}} \right)^{n_b} \left( \frac{1 + \frac{s}{\omega_h}}{1 + \frac{s}{\omega_b}} \right)^{a} \left( \left[ \left( \frac{1 + \frac{s}{\omega_h}}{1 + \frac{s}{\omega_h}} \right)^{ib} \right]_{C_j} \right)^{-sign(b)} \cdot \frac{1}{\left( 1 + \frac{s}{\omega_h} \right)^{n_b}}$$

*Transmittance en boucle ouverte pour l'état paramétrique nominal du procédé*

$32'$

**Détermination des coefficients $\omega_b$, $\omega_h$ et $Y_0$**

$38$

$$C_{ne}(s) = \frac{\beta(s)}{G_0(s)}$$

*Correcteur CRONE d'ordre non entier*

**Synthèse du correcteur CRONE par approximation**

$36$

$$C(s) = \frac{\sum\limits_{k=0}^{N_1} b_k s^k}{\sum\limits_{k=0}^{N_2} a_k s^k}$$

*Correcteur CRONE*

**Discrétisation du correcteur CRONE**

$34$

$$C(z) = \frac{\sum\limits_{k=0}^{N'_1} b'_k z^{-k}}{\sum\limits_{k=0}^{N'_2} a'_k z^{-k}}$$

*Correcteur CRONE discrétisé*

# FIG. 3

FIG. 5

FIG. 6

FIG. 8

FIG. 7